Europäisches Patentamt

European Patent Office

Office européen des brevets

(11) Publication number: **0 158 825**
**B1**

# EUROPEAN PATENT SPECIFICATION

(45) Date of publication of patent specification: **28.12.88**

(21) Application number: **85102816.7**

(22) Date of filing: **12.03.85**

(51) Int. Cl.[4]: **B 24 D 3/10, C 09 K 3/14,**
**B 24 D 17/00, B 24 D 18/00**

(54) **Coated oxidation-resistant porous abrasive compact and method for making same.**

(30) Priority: **20.03.84 US 591627**

(43) Date of publication of application:
**23.10.85 Bulletin 85/43**

(45) Publication of the grant of the patent:
**28.12.88 Bulletin 88/52**

(84) Designated Contracting States:
**AT BE CH DE FR GB IT LI SE**

(56) References cited:
**EP-A-0 046 374**
**US-A-3 929 432**
**US-A-4 224 380**

(73) Proprietor: **GENERAL ELECTRIC COMPANY**
**1 River Road**
**Schenectady New York 12305 (US)**

(72) Inventor: **Mar, Bonnie**
**448 Pittsfield Drive**
**Worthington, OH 43085 (US)**

(74) Representative: **Catherine, Alain**
**General Electric France Service de Propriété**
**Industrielle 18 Rue Horace Vernet B.P. 76**
**F-92134 Issy-les-Moulineaux Cedex (FR)**

Courier Press, Leamington Spa, England.

# EP 0 158 825 B1

**Description**

**Background of the invention**

The present invention relates to polycrystalline masses of self-bonded diamond particles, i.e. polycrystalline compacts) useful as tool components and more particularly to a metal coated polycrystalline mass with enhanced oxidation resistance.

It is well known to use diamond, cubic boron nitride (CBN) or other abrasive particles embedded in the grinding, abrading, or cutting section of various tools. The active sections of such tools include resin bond and metal bond construction. Such abrasive particles have been coated with various metals and alloys of metals in single or multiple layers in order to enhance bond retention, improve high temperature oxidation resistance, suppress high temperature graphitization, and like benefits. Such coatings are especially useful when fine-grain diamond or other abrasive grits are employed in the various tools. Representative art in this single grain coating endeavor include British Patents Nos. 1344237 and 712057, U.S. Pat. No. 2,367,404, U.S. Pat. No. 3,650,714, U.S. Pat. No. 3,957,461, U.S. Pat. No. 3,929,432, U.S. Pat. No. 3,984,214, and German Offenlungsschrift 2124637.

Also well known in this art are compacts of polycrystalline abrasive particles typified by polycrystalline diamond and polycrystalline CBN compacts. Such compacts are represented by U.S. Patents Nos. 3,745,623 and 3,609,818 with respect to polycrystalline diamond compacts and U.S. Patents Nos. 3,767,371 and 3,743,489 with respect to polycrystalline CBN compacts. While such polycrystalline compacts represent a significant contribution to the art in many fields of use, thermal degradation at elevated temperature, eg. above about 700°C, did limit their usefulness, especially in metal matrix bond applications. The thermal stability of such polycrystalline compacts was improved with the advent of porous self-bonded diamond and CBN compacts containing less than about 3% non-diamond phase, hereinafter termed "porous compact". Compacts of this type are the subject of U.S. Patents Nos. 4,224,380 and 4,288,248.

Since, on a microscale, the surface of porous compacts is extremely rough, bond retention by mechanical means generally is adequate; hence, the art has not recognized a general need for a matrix bond reactive coating as is the case with microcrystalline counterpart. Additionally, the excellent thermal stability property possessed by the noted self-bonded diamond particles with an interconnecteed network of pores dispersed throughout is postulated to be due to the removal of metallic sintering aid normally found in such compacts which metallic substance possesses a different coefficient of thermal expansion than is possessed by the diamond. Thus, it was theorized that application of a matrix bond reactive coating could subject the porous compact to possible reinfiltration by the coating metal with consequent loss of thermal stability occasioned thereby.

An additional factor militating against application of a matrix bond reactive coating is the expected stability of such compact to not oxidize at higher temperatures of processing required in metal bond formation. Oxidation stability is not a recognized problem of conventional compacts. Moreover, larger single-crystal diamond of comparable dimension is known to possess fairly good oxidation stability due to their large size since diamond oxidation is a fucntion of temperature, time, and state of division (surface area per unit weight).

**Broad statement of the invention**

The present invention is based on the recognition that the above-described porous polycrystalline compacts exhibit unexpectedly inferior oxidation resistance compared to conventional polycrystalline diamond compact or single-crystal diamond of similar size (i.e. weight). Since metal bond formation should be conducted under an inert or reducing atmosphere and since the porous compacts are known to posses thermal stability, manufacturers (which process the compacts into a metal bond tool) ordinarily would not observe significant oxidation degradation as such inert or reducing conditions would not contribute to any oxidation. Also, manufacturers would not expect to see significant oxidation degradation.

Yet, metal bond fabrication is not always conducted under inert atmosphere conditions so that oxidation could be worse than thought, as noted above. Fortuitously, with the recognition that the porous compacts exhibit an oxidation profile like that of mesh diamond, the present invention was arrived at for enhancing the oxidation resistance of such porous compacts. The present invention, then, is an improved polycrystalline compact self-bonded diamond particles having a network of interconnected empty pores dispersed throughout. The improvement in the polycrystalline mass or compact is for enhancing oxidation resistance of this type of compact and comprises all of the exterior surfaces of said compact being enveloped with a continuous coating which is effective under metal bond formation conditions so that oxidation of the diamond in said compact does not exceed a threshold level whereat loss of diamond properties of the compact occurs. Metal bond fabrication conditions are defined herein as comprising a temperature of not substantially above about 1200°C in the presence of oxygen or water vapor, ie. oxidizing substances under metal bond fabrication conditions.

The corresponding method for improving the oxidation resistance of the porous polycrystalline compact comprises enveloping all of the exterior surfaces of the mass with a continuous coating which is effective under metal bond formation conditions so that oxidation of diamond in said compact does not exceed a threshold level whereat loss of diamond properties of the compact occurs. With a typical metal

2

coatings in the diamond art field, the thickness of the continuous coating at its thinnest location should be at least about 25—30 micrometer in thickness, advantageously at least about 50 microns, and preferably at least about 100 micrometer.

Advantages of the present invention include the enhancement of oxidation resistance of the porous mass or compact while preserving the excellent thermal stability thereof. Another advantage is that the oxidation resistance enhancement is achieved without undesirable loss of properties of the compact, eg. as a tool component. A further advantage is an improved porous polycrystalline compact which is well retained within a metal matrix. These and other advantages will become readily apparent to those skilled in the art based upon the disclosure contained herein.

Brief description of the drawings

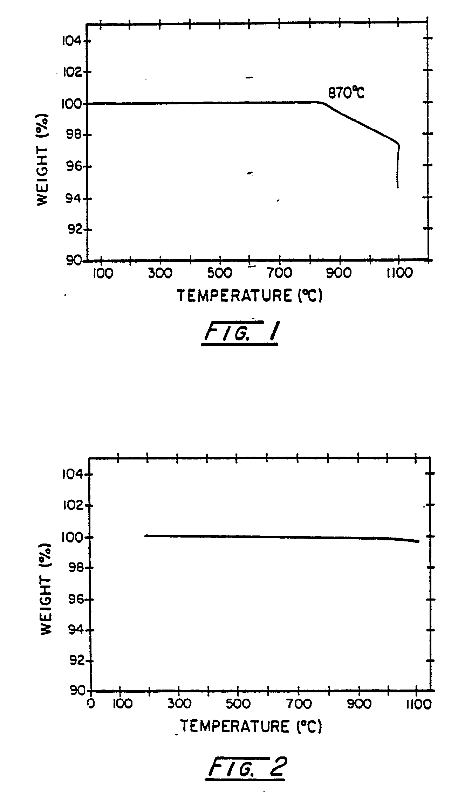

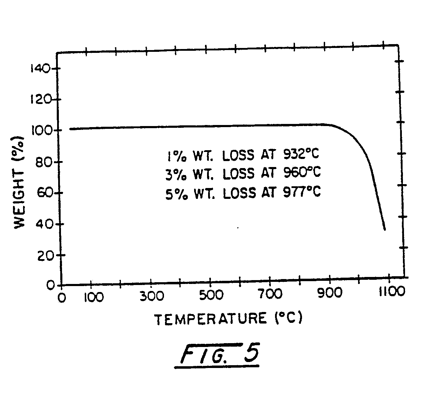

Figs. 1—5 are thermogravimetric analysis curves of porous compacts prepared and tested in the Examples. Details of such tests are displayed in the Examples.

Detailed description of the invention

As noted above, diamond oxidation is a function of temperature, time, and state of division. As a pure chemical species, diamond has a specific oxidation threshold temperature. Unexpectedly, it was a discovery of the present invention that the state of division of the diamond was an important consideration in assessing diamond oxidation. That is, while it would be expected that a polycrystalline mass would behave in a manner like that of an equivalent weight single crystal diamond, with respect to diamond oxidation, it was discovered that the porous polycrystalline mass exhibited oxidation characteristics more typical of very small single crystals. This is theorized to occur, in part, due to the rough surface and connected porosity of the porous mass. The following table displays comparative oxidation rate data for various diamond types in normal air and enhances an understanding of the specific oxidation threshold temperature for such various diamond types.

TABLE 1[a]

| Sample | Temperature (°C) for [b] 1% weight loss at 2°C/minute heating rate | Interpolated temperature (°C) oxidation threshold at 100°C/minute heating rate |
|---|---|---|
| 1/5 Carat natural single crystal | 852 | 960 |
| 20/25 Mesh synthetic diamond | 770 | 900 |
| 230/270 Mesh synthetic diamond | 640 | — |
| 230/270 Mesh natural diamond (crushed bort) | 640 | 725 |
| Porous polycrystalline diamond compact | 627[c] | 765 |
| 230/270 mesh crushed synthetic diamond | 615 | 740 |

[a] TGA analysis, see Examples for details.
[b] Heating schedule of 50°C/min. to 500°C, then 2°C/min.
[c] Average of 6 samples ranging from 7.93 to 130.54 mg in weight, temperature range of 612°C—662°C.

The above-tabulated information emphasizes the importance which dimension of the diamond has on its oxidation threshold temperature. Also apparent from the foregoing table is the influence which heating rate has on the oxidation threshold temperature. Quite unexpected is the low oxidation threshold temperature determined for the porous polycrystalline diamond compact. It is the improvement in oxidation resistance or stability with concomitant preservation of performance and thermal stability of the porous polycrystalline diamond compact which is achieved in accordance with the precepts of the present invention.

Referring initially to the porous polycrystalline diamond compacts, reference again is made to U.S. Patents Nos. 4,224,380 and 4,288,248 which provide a full disclosure thereof. The porous polycrystalline diamond compact comprises diamond particles which comprise between about 70% and 95% by volume

3

of the compact. A metallic phase of sintering aid material is present substantially uniformly throughout the compact and is in a minor amount, typically ranging from about 0.05 to about 3% by volume of the compact. A network of interconnected empty pores are dispersed through the compact and are defined by the diamond particles and the metallic phase. Such pores generally comprise between about 5% and 30% by volume of the compact. The compact is comprised of self-bonded diamond particles typically ranging in size from between about 1 and 1,000 micrometer. While such compacts may be bonded to a substrate, e.g. cobalt cemented tungsten carbide, such supported porous compacts typically do not encounter processing conditions under which oxidation stability problems are encountered, though certainly the teachings of the present invention may be applied to such composite compacts.

The metallic phase of sintering aid material is a catalyst/solvent for diamond and is utilized in compact formation by a high pressure/high temperature technique well known in the art and typified by U.S. Patents Nos. 2,947,609 and 2,947,610. Such catalytic material is selected from the group consisting of a catalytic metal, in elemental form selected from the group consisting of Group VIII metals, chromium, manganese, tantalum; a mixture of alloyable metals of the catalytic metals and non-catalytic metals; an alloy of at least two of the catalytic metals; and an alloy of catalytic metal and non-catalytic metal. Cobalt in elemental or alloy form has found favor in the art as the metallic phase or catalyst/solvent for diamond compact formation.

The porous polycrystalline diamond compact is converted to its thermally stable form by removal of the metallic phase by acid treatment, liquid zinc extraction, electrolytic depleting, or similar processes. The compact has substantially no residual metallic phase or catalyze back-conversion, or expand at a rate different than the surrounding diamond, or to catalyze the conversion of diamond to graphite, and thereby break the diamond-diamond particle bonds at elevated temperature. It is this desire to prevent this thermal degradation which the art has recognized in its predilection to not coat the porous polycrystalline diamond mass. In this regard, the art also recognizes the importance in embedding the porous polycrystalline diamond compact in a metal matrix under conditions such that metal bond formation does not result in reinfiltration of metal into the compact to any significant degree. Such care in processing ensures the desired thermal stability characteristic of the porous polycrystalline diamond compact. Under proper processing conditions, the porous polycrystalline diamond compact is stable up to 1200°C to 1300°C without substantial thermal degradation. Such conditions, as the art well recognizes, include an inert or reducing atmosphere when temperatures are expected to be above 600°C—700°C.

According to the present invention, the porous polycrystalline diamond compact thus-formed then is subjected to a coating process for enveloping all of the exterior surfaces of the compact with a continuous coating. The coating most probably will be a metal for economy and efficiency, and typically will be a metal familiar through use in the diamond art field. Such coating metal may be an inert barrier under metal bond formation conditions or may be a sacrificial or passivated coating, e.g. reactive with oxygen or water vapor like titanium. Metal coatings will be preferred for imparting compactibility with the metal matrix, remaining stable in the processing atmosphere, being stable in the presence of diamond, and being durable during processing. The coating may soften or even melt during metal bond fabrication without departing from the spirit of the invention, so long as the threshold level whereat loss of diamond properties is evidenced does not occur during processing. Of importance is that a minimum thickness and continuity of the coating be maintained. Corresponding with thickness is the porosity exhibited by the particular material applied as the coating. Certainly denser coating materials will provide a more efficient barrier to oxygen and permit a thinner coating to be applied, whereas more porous coating materials may require increased thickness to compensate therefor. Such porosity or density may be inherent in the material and may be a result of the particular method of choice for application of the coating. Generally, the coating will range in thickness from about 30 micrometer to about 150 micrometer or even higher on occasion.

Metals predominating in the diamond art field include, for example, nickel, copper, titanium, iron, cobalt, chromium, tantalum, and the like. Of course mixtures, successive layers (of the same or different composition, eg. an inner layer of refractory metal like W or Zr and an outer layer of other conventional metal), or alloys may be employed as necessary, desirable, or convenient. While metal coatings probably will find favor in the art, it should be understood that acceptable coatings may include ceramic coatings, organometallic coatings, or the like provided that the characteristics necessary for accomplishing the oxidation resistance enhancement are displayed by such material. In this regard, the coating material need not be a carbide-former, ie. need not react with diamond for forming a chemical bond therewith. It should be understood, however, that should some chemical reaction between the coating material and the diamond occur, such reaction may be tolerated provided that substantially little or no loss of diamond properties of the compact occurs thereby. By threshold level whereat loss of diamond properties of the compact occurs is meant that the diamond properties exhibited by the porous polycrystalline diamond compact are maintained. Such properties include, for example, thermal stability, transverse rupture strength, hardness, and like properties, for example as noted in U.S. Patents Nos. 4,224,380 and 4,288,248. It should be understood that sacrifice of some of the compact can be tolerated without loss of such diamond properties as those skilled in the art will appreciate.

The preferred metal coatings may be applied to the porous polycrystalline diamond compact by a variety of conventional techniques. Although not yet tested, electrolytic plating is thought to be the preferred technique. To attain uniform deposits via electroplating on non-electrically conducting material such as polycrystalline diamond, it is necessary to perform two functions: activate the surface to make it electrically conductive; and use a mechanical device to keep particles in motion during plating. The first objective is attained by coating the surface of the porous compact with a metal. Several processes are available and have been used in the art. The two predominating processes include immersing the diamond in an acid stannous chloride solution followed by reduction of silver on the prepared surface using a Brashear formula or the more commonly and newer procedure wherein deposition of a minute layer of electroless nickel or copper is employed. A thin metallic layer applied by metal evaporation, sputtering, chemical vapor deposition, or pack diffusion are alternative processes which may be used as is necessary, desirable, or convenient in conventional fashion.

Once the surface of the porous compact is rendered conductive, the compacts are plated easily using standard electrolytic techniques. Deposition of the metal is a well-known process—the even deposition of the metal without adhesion of the compacts to each other presenting a difficulty. Barrel plating is a technique which electroplaters have resorted to for overcoming such difficulty. In this process, the activated porous compact is placed in a tilted rotating cylinder or barrel which has a cathode at the base. The anode is of nickel, when nickel plating is desired, and is placed at the upper end of the tilted barrel. The plating solution most commonly employed is a Watts bath. The Watts bath comprises approximately 100 g/L of nickel sulfate hexahydrate, 60 g/L of nickel chloride hexahydrate, and 40 g/L of boric acid in an aqueous solution. The plating is conducted under conditions and for a time adequate for achieving the ultimate thickness of the coating desired for the particular metal being applied, intended use of the coated polycrystalline compact, and like factors.

Metal bond fabrication typically is practiced at temperatures ranging from as low as about 700°C on up to temperatures of about 1200°C or slightly higher. Since the porous polycrystalline diamond compact is susceptible to oxidation within such temperature range, protection is required. In this regard, it should be restated that the porous compact is quite thermally and oxygen stable when processed under an inert or reducing atmosphere. As oxidizing conditions are created, typically by the presence of air or water vapor, oxidation, however, will commence. At lower levels of oxygen of water in the atmosphere, it appears that thinner coatings can be tolerated for achieving the requisite degree of protection. However, it should be recognized that trace amounts of water or oxygen only are required for commencement of the oxidation process. It should be emphasized additionally that the presence of even pinholes in the coating normally cannot be tolerated as oxygen will penetrate into the porous compact and degradation quickly ensue. Employment of the coated compact of the present invention has the benefit of permitting processing thereof to be conducted under less stringent or rigorous conditions. Additionally, a measure of protection is afforded in case accidental entry of oxygen or water vapor into the process is experienced. Metal bond formation can be practiced conventionally by molding of metal powder as well as by conventional infiltration or like techniques. Such practices are quite conventional and little more need be stated about such metal bond formation herein.

The following examples show how the present invention can be practiced but should not be construed as limiting. In this application, all proportions and percentages are by weight and all units are in the metric system, unless otherwise expressly indicated. Also, all citations are expressly incorporated herein by reference.

In the examples

Thermogravimetric analysis (hereinafter TGA) is a continuous measure of sample weight under elevated temperature conditions in a controlled atmosphere. A decrease in sample weight is indicative of volatile reaction products being evolved from the sample. For diamond, oxygen will react at elevated temperature to form carbon monoxide, carbon dioxide, and mixtures thereof. J. E. Field (Editor), *The Properties of Diamond*, Academic Press, New York, New York (1979). TGA measurement will permit determination of the threshold temperature at which diamond products commence oxidizing TGA curves reported herein were generated on a DuPont 1090 Thermal Analyzer with all samples being placed on a platinum sample holder. All atmospheres were introduced at a rate of 75 ml/min. An "air" atmosphere utilized bottled breathing air. Argon carrier gas was of commercial purity (99.9% pure).

Porous polycrystalline diamond compacts were prepared in accordance with U.S. Patents Nos. 4,224,380 and 4,288,248. The compacts evaluated ranged in size from just under 8 mg to in excess of 130 mg total weight. Titanium metal coating was applied to the porous polycrystalline diamond compacts by conventional sputtering deposition techniques. Nickel-phosphorous coatings were applied by conventional electroless deposition techniques in successive layers in order to achieve the desired thickness level reported in the examples. Additional experimental details will be set forth in connection with each of the examples which follows.

Example 1

Porous polycrystalline diamond compact (62 mg total weight) was subjected to TGA analysis over a temperature range of 25°C—1150°C at a heating rate of 5°C/min. Fig. 1 displays the TGA curve recorded under a heating atmosphere of commercial argon gas (5 ppm oxygen and 5 ppm moisture). A 1% weight loss of the sample was recorded at 870°C. The extremely corrosive nature and high rate of reactivity of low levels of oxygen/water vapor with the porous polycrystalline diamond compacts is demonstrated in this run.

The TGA test was repeated except that a drying system (calcium sulfate column) was attached to the inlet argon gas line. Additionally, a copper strip was placed inside the TGA furnace to absorb any oxygen/moisture trapped and condensed in the gas. The results of this run are displayed in Fig. 2. It will be noted that virtually no sign of weight loss (0.25 weight percent recorded) under the same experimental conditions was recorded. This demonstrates that manufacturers which maintain the recommended inert or reducing atmosphere conditions in metal bond formation with the subject porous polycrystalline diamond compacts would experience little loss of compact, and thus little loss, at most, of resulting diamond physical properties under appropriate processing conditions. Manufacturers which do not maintain appropriate conditions, or manufacturers which experience equipment malfunction, will lose diamond readily from the compact with attendant loss of diamond properties.

Referring once again to Fig. 1 above, it is surprising and unexpected that the porous polycrystalline diamond compacts oxidize like fine particles diamond rather than like single crystalline diamond of comparable weight. Nevertheless, such reactivity with oxygen is demonstrated by the results in this example.

Example 2

In order to enhance oxidation stability of the porous polycrystalline diamond compacts, various compacts were coated with titanium (3—5 micrometer coating thickness) and nickel-phosphorous (about 30 micrometer coating thickness). The titanium-coated compact (23.41 mg compact weight prior to coating) was heated at a rate of 92°C/min. to an isothermal condition of 1100°C in an air atmosphere. At a temperature of 780°C, substantial loss of diamond was recorded. On a substantially identical compact coated with titanium by conventional sputter technique, when tested in an argon atmosphere with traces of oxygen in water, the sample showed an increase in weight to a temperature of about 1000°C followed by a small weight decrease (0.5 weight percent) during the next half hour of testing. The weight increase apparently is due to oxide formation on the titanium coating with residual oxygen in the commercial argon atmosphere. Thereafter, the weight decrease is believed to be due to oxidation of the diamond. It is believed that the coating lacked sufficient thickness to provide effective protection under processing conditions.

Additional samples of porous compact were coated with a nickel-phosphorous coating to a thickness of about 30 micrometer and TGA tests conducted under isothermal heating conditions at a temperature of 850°C after a temperature ramp of 94°C/min. Under such conditions, the compacts remained stable to oxidation for a total heating time of 18 minutes. Additional compact samples from the same lot when tested under isothermal conditions to 1000°C, however, quickly oxidized after only 10 minutes of heating. These results suggest that the more rapid heating rate schedule employed results in an increased oxidation threshold temperature compared to samples which are heated at a slower rate. It is possible that the 850°C isothermal tested coated compact may be subjected to oxidation upon longer times of heating based upon these and other tests conducted during the course of research on the present invention.

An additional sample was coated with a 7.7 wt% copper coating estimated to be 50 micrometer in thickness. This sample was subjected to an 850°C isothermal TGA analysis after a similar 94°C/min. heating ramp. After about 4—5 minutes of heating, some increase in weight was noted. At about 9 minutes heating time when the temperature had reached 800°, substantial weight loss commenced. It appears that the initial weight gain can be attributed to oxidation of the copper and subsequent weight loss attributed to oxidation of the diamond. It was suspected that the copper coating was porous also.

Example 3

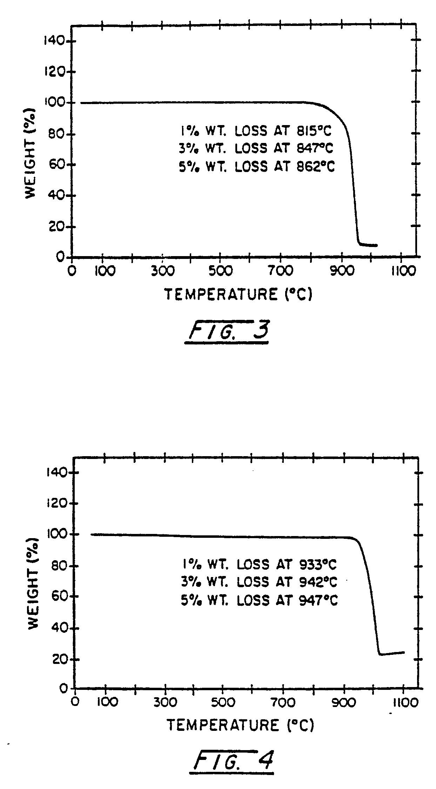

Additional samples of porous compact were coated with nickel phosphorous coating at thicknesses ranging from 30 micrometer to in excess of 100 micrometer. Each of the coated samples was subjected to TGA evaluation in an air atmosphere following a heating regimen of 50°C per minute to a temperature of 500°C followed by a 2°C per minute heating schedule. By using the weight at 500°C, any weight loss due to desorption of material is disregarded in the analysis. Also, no oxidation or other undesirable loss of properties results at such threshold temperature. Sample 1 weighed 71.42 mg, sample 2 weighed 82.52 mg, and sample 3 weighed 162.61 mg. The TGA weight loss results at 1%, 3%, and 5% by weight loss are displayed in the following table and in corresponding Figs. 3—5.

TABLE 2

| Sample No. | Coating thickness (micrometer) | Temp(°C) 1% weight loss | Temp(°C) 3% weight loss | Temp(°C) 5% weight loss |
|---|---|---|---|---|
| 1 | 30 | 815 | 847 | 862 |
| 2 | 40—50 | 933 | 942 | 947 |
| 3 | 100—150 | 932 | 960 | 977 |

The above-tabulated results show that the slower heating schedule results in a lower threshold temperature whereat oxidation of the diamond commences. These result also demonstrate that the 30 micrometer coating, while an improvement over uncoated porous polycrystalline diamond compact, is at an apparent approximate minimum thickness for providing adequate oxidation stability when compared, for example, to natural diamond which generally is stable up to 850°C or slightly higher.

At a coating thickness of 40—50 micrometer, however, the threshold temperature has increased by about 100°C compared to the 30 micrometer coating. A compact which is substantially more resistant to oxidation than natural single crystal diamond clearly has been manufactured. At a thickness of about 100—150 micrometer, however, no apparent benefit in oxidation stability has been achieved at the expense of extra coating thickness. It should be recognized that these coatings thicknesses, of course, are appropriate for nickel-phosphorous coatings. It would be expected that somewhat different coating thicknesses would be appropriate for different coating materials.

## Claims

1. A polycrystalline compact of self-bonded diamond particles having a network of interconnected empty pores dispersed throughout the compact, with enhanced oxidation resistance, suitable for use as a tool component, characteristized in that all of the exterior surfaces of said compact are enveloped with a continuous coating which is effective under tool metal bond fabrication conditions in the presence of oxygen of water vapor so that oxidation of diamond in said compact does not exceed that of a single crystal diamond of comparable weight which has been processed under the same fabrication conditions as the compact.

2. The compact of claim 1 wherein said coating is at least about 30 micrometers in thickness.

3. The compact of claim 1 wherein said coating is metal.

4. The compact of claim 3 wherein said coating is at least about 30 micrometers in thickness.

5. The compact of claim 4 wherein the coating ranges in thickness from about 30 to 150 micrometers.

6. The compact of claim 3 wherein said metal coating is selected from the group consisting of nickel, copper, titanium, iron, cobalt, chromium, tantalum, and alloys and mixtures thereof.

7. The compact of claim 1 wherein said continuous coating comprises successive layers of the same or different coating.

8. A method for producing a polycrystalline compact of self-bonded diamond particles having a network of interconnected empty pores dispersed throughout the compact, with improved oxidation resistance, suitable for use as a tool component, characterized in that all of the exterior surfaces of said porous polycrystalline compact are provided with a continuous coating which is effective under tool metal bond fabrication conditions in the presence of oxygen or water vapor so that oxidation of diamond in said compact does not exceeed that of a single crystal diamond of comparable weight which has been processed under the same fabrication conditions as the compact.

9. The method of claim 8 wherein said compact is enveloped with a continuous coating which is at least about 30 micrometer in thickness.

10. The method of claim 8 wherein said coating is metal.

11. The method of claim 10 wherein said coating is at least about 30 micrometer in thickness.

12. The method of claim 11 wherein said coating ranges in thickness from about 30 to 150 micrometer.

13. The method of claim 10 wherein said compact is enveloped with a coating comprising nickel, copper, titanium, iron, cobalt, chromium, tantalum, and mixtures and alloys thereof.

14. The method of claim 10 wherein said enveloping comprises electrolytic deposition of a metal from an aqueous electroplating bath under electroplating conditions.

15. A method for manufacturing a tool having an area comprising a metal matrix bonded to a polycrystalline compact of self-bonded diamond particles having a network of interconnected empty pores dispersed throughout the compact, said porous compact showing enhanced oxidation resistance under metal bond fabrication conditions in the presence of oxygen and water vapor, characterised in that all of the exterior surfaces of said porous compact are provided with a continuous coating which is effective under said tool metal bond fabrication conditions so that oxidation of diamond in said compact does not exceed that of a single crystal diamond of comparable weight processed under the same fabrication conditions, and bonding the coated compact to said area of the tool.

16. The method of claim 15 wherein said coating on said polycrystalline compact is metal.

17. The method of claim 15 wherein said coating is at least about 30 micrometer in thickness.

18. The method of claim 16 wherein said coating is at least about 50 micrometer in thickness.

19. The method of claim 18 wherein said coating ranges from about 30 to 150 micrometer in thickness.

## Patentansprüche

1. Polykristalliner Preßling aus selbstgebundenen Diamantteilchen mit einem Netzwerk miteinander verbundener leerer Poren, die durch den Preßling dispergiert sind, wobei der Preßling eine verbesserte Oxidationsbeständigkeit aufweist und zur Verwendung als Werkzeugkomponente geeignet ist, dadurch gekennzeichnet, daß alle äußeren Oberflächen des Preßlings mit einem zusammenhängenden Überzug eingehüllt sind, der wirksam ist unter den Bedingungen der Herstellung von Werkzeug-Metallbindungen in Gegenwart von Sauerstoff oder Wasserdampf, so daß die Oxidation des Diamanten im Preßling die eines Einkristall-Diamanten vergleichbaren Gewichtes, der unter den gleichen Herstellungsbedingungen wie der Preßling behandelt worden ist, nicht übersteigt.

2. Preßling nach Anspruch 1, worin der Überzug eine Dicke von mindestens etwa 30 µm aufweist.

3. Preßling nach Anspruch 1, worin der Überzug aus Metall besteht.

4. Preßling nach Anspruch 3, worin der Überzug eine Dicke von mindestens etwa 30 µm aufweist.

5. Preßling nach Anspruch 4, worin der Überzug eine Dicke im Bereich von etwa 30 bis 50 µm aufweist.

6. Preßling nach Anspruch 3, worin der Metallüberzug ausgewählt ist aus der Gruppe bestehend aus Nickel, Kupfer, Titan, Eisen, Kobalt, Chrom, Tantal und deren Legierungen und Mischungen.

7. Preßling nach Anspruch 1, worin der zusammenhängende Überzug aufeinanderfolgende Schichten des gleichen oder verschiedener Überzüge umfaßt.

8. Verfahren zum Herstellen eines polykristallinen Preßlings aus selbstgebundenen Diamantkristallen mit einem Netzwerk miteinander verbundener leerer Poren, die durch den Preßling dispergiert sind, wobei der Preßling eine verbesserte Oxidationsbeständigkeit aufweist und brauchbar ist zur Verwendung als Werkzeugkomponente, dadurch gekennzeichnet, daß alle äußeren Oberflächen des porösen polykristallinen Preßlings mit einem zusammenhängenden Überzug versehen werden, der unter den Bedingungen der Herstellung von Werkzeug-Metallbindungen in Gegenwart von Sauerstoff oder Wasserdampf wirksam ist, so daß die Oxidation von Diamant in dem Preßling die eines Einkristall-Diamanten vergleichbaren Gewichtes, der unter den gleichen Herstellungsbedingungen wie der Preßling behandelt worden ist, nicht übersteigt.

9. Verfahren nach Anspruch 8, worin der Preßling mit einem zusammenhängenden Überzug eingehüllt ist, der eine Dicke von mindestens etwa 30 µm aufweist.

10. Verfahren nach Anspruch 8, worin der Überzug aus Metall besteht.

11. Verfahren nach Anspruch 10, worin der Überzug eine Dicke von mindestens etwa 30 µm aufweist.

12. Verfahren nach Anspruch 11, worin der Überzug eine Dicke im Bereich von etwa 30 bis 150 µm aufweist.

13. Verfahren nach Anspruch 10, worin der Preßling mit einem Überzug eingehüllt ist, der Nickel, Kupfer, Titan, Eisen, Kobalt, Chrom, Tantal oder deren Mischungen oder Legierungen umfaßt.

14. Verfahren nach Anspruch 10, worin das Umhüllen das elektrolytische Abscheiden eines Metalles aus einem wäßrigen Elektroplattierungsbad unter zum Elektroplattieren geeigneten Bedingungen umfaßt.

15. Verfahren zum Herstellen eines Werkzeuges mit einer Fläche, umfassend eine Metallmatrix, die mit einem polykristallinen Preßling aus selbstgebundenen Diamantteilichen verbunden ist, wobei der Preßling ein Netzwerk von darin dispergierten, miteinander verbundenen leeren Poren aufweist und er unter den Bedingungen der Herstellung der Metallbindung in Gegenwart von Sauerstoff und Wasserdampf eine verbesserte Oxidationsbeständigkeit aufweist, dadurch gekennzeichnet, daß alle äußeren Oberflächen des porösen Preßlings mit einem zusammenhängenden Überzug versehen werden, der wirksam ist unter den Bedingungen der Herstellung der Werkzeug-Metallbindung, so daß die Oxidation von Diamant in dem Preßling die eines Einkristall-Diamanten vergleichbaren Gewichtes, der unter den gleichen Herstellungsbedingungen behandelt worden ist, nicht übersteigt und

Verbinden des überzogenen Preßlings mit der genannten Fläche des Werkzeuges.

16. Verfahren nach Anspruch 15, worin der Übezug auf dem polykristallinen Preßling aus Metall besteht.

17. Verfahren nach Anspruch 15, worin der Überzug eine Dicke von mindestens etwa 30 µm aufweist.

18. Verfahren nach Anspruch 16, worin der Überzug eine Dicke von mindestens etwa 50 µm aufweist.

19. Verfahren nach Anspruch 18, worin der Überzug eine Dicke im Bereich von etwa 30 bis 150 µm aufweist.

## Revendications

1. Compact polycristallin de particules de diamant autoliées avec un réseau de pores vides interconnectés dispersé dans le compact, ayant une résistance accrue à l'oxydation et approprié à l'utilisation comme composant d'outil, ledit compact étant caractérisé en ce que toutes ses surfaces extérieures sont enveloppées d'un enrobage continu qui est efficace dans les conditions de réalisation d'une liaison métallique pour outil en présence d'oxygéne ou de vapeur d'eau pour que l'oxydation du diamant dans ledit compact ne dépasse pas celle d'un diamant monocristallin de poids comparable qui a été traité dans les mêmes conditions de fabrication que le compact.

2. Compact selon la revendication 1, dans lequel ledit enrobage a une épaisseur d'au moins environ 30 micromètres.

3. Compact selon la revendication 1, dans lequel ledit enrobage est en métal.

4. Compact selon la revendication 3, dans lequel ledit enrobage a une épaisseur d'au moins environ 30 micromètres.

5. Compact selon la revendication 4, dans lequel l'enrobage a une épaisseur comprise dans la gamme d'environ 30 à 150 micromètres.

6. Compact selon la revendication 3, dans lequel ledit enrobage métallique est choisi dans le groupe constitué par le nickel, le cuivre, le titane, le fer, le cobalt, le chrome, le tantale et leurs alliages et mélanges.

7. Compact selon la revendication 1, dans lequel ledit enrobage continu comprend des couches successives du même enrobage ou d'enrobages différents.

8. Procédé pour produire un compact polycristallin de particules de diamant autoliées avec un réseau de pores vides interconnectés dispersé dans le compact, ayant une résistance accrue à l'oxydation et approprié à l'utilisation comme composant d'outil, caractérisé en ce que l'on enveloppe toutes les surfaces extérieures dudit compact polycristallin poreux d'un enrobage continu qui est efficace dans les conditions de réalisation d'une liaison métallique pour outil en présence d'oxygène ou de vapeur d'eau pour que l'oxydation du diamant dans ledit compact ne dépasse pas celle d'un diamant monocristallin de poids comparable qui a été traité dans les mêmes conditions de fabrication que le compact.

9. Procédé selon la revendication 8, dans lequel ledit compact est enveloppé d'un enrobage continu ayant une épaisseur d'au moins environ 30 micromètres.

10. Procédé selon la revendication 8, dans lequel ledit enrobage est en métal.

11. Procédé selon la revendication 10, dans lequel ledit enrobage a une épaisseur d'au moins environ 30 micromètres.

12. Procédé selon la revendication 11, dans lequel ledit enrobage à une épaisseur comprise dans la gamme d'environ 30 à 150 micromètres.

13. Procédé selon la revendication 10, dans lequel ledit compact est enveloppé d'un enrobage comprenant du nickel, du cuivre, du titane, du fer, du cobalt, du chrome, du tantale et leurs mélanges et alliages.

14. Procédé selon la revendication 10, dans lequel la formation dudit enrobage comprend le dépôt électrolytique d'un métal à partir d'un bain aqueux de dépôt électrolytique dans des conditions de dépôt électrolytique.

15. Procédé pour fabriquer un outil ayant une surface comprenant une matrice métallique liée à un compact polycristallin de particules de diamant autoliées avec un réseau de pores vides interconnectés dispersé dans l'ensemble du compact, ledit compact poreux présentant une résistance acccue à l'oxydation dans les conditions de réalisation d'une liaison métallique en présence d'oxygène et de vapeur d'eau, caractérisé en ce que l'on enveloppe toutes les surfaces extérieures dudit compact poreux d'un enrobage continu qui est efficace dans lesdites conditions de fabrication d'une liaison métallique pour outil pour que l'oxydation du diamant dans ledit compact ne dépasse pas celle d'un diamant monocristallin de poids comparable traité dans les mêmes conditions de fabrication et on lie le compact enrobé à ladite surface de l'outil.

16. Procédé selon la revendication 15, dans lequel ledit enrobage sur ledit compact polycrystallin est en métal.

17. Procédé selon la revendication 15, dans lequel ledit enrobage à une épaisseur d'au moins environ 30 micromètres.

18. Procédé selon la revendication 16, dans lequel ledit enrobage a une épaisseur d'au moins environ 50 micromètres.

19. Procédé selon la revendication 18, dans lequel ledit enrobage a une épaisseur comprise dans la gamme d'environ 30 à 150 micromètres.

FIG. 1

FIG. 2

FIG. 3

FIG. 4

FIG. 5